# EUROPÄISCHE PATENTANMELDUNG

(11) **EP 4 692 477 A1**
(43) Veröffentlichungstag der Anmeldung: **11.02.2026**
(21) Anmeldenummer: 24193193.0
(22) Anmeldetag: 06.08.2024
(51) Int. Cl.: E03C 1/02, E03C 1/04, E03C 1/048, F16K 11/044

(54) **SANITÄRE AUSLAUFARMATUR**

(71) Anmelder: Hansgrohe SE, 77761 Schiltach (DE)
(72) Erfinder: Benz, Fabian, 78661 Irslingen (DE); Schmider, Jürgen, 77716 Haslach (DE); Blattner, Joachim, 77716 Haslach (DE)
(74) Vertreter: Patentanwälte Ruff, Wilhelm, Beier, Dauster & Partner mbB

(57) **Zusammenfassung**

2.1. Die Erfindung bezieht sich auf eine sanitäre Auslaufarmatur mit einem Armaturengehäuse (1), das einen längserstreckten Auslaufrohrkörper (2) umfasst, einem Fluideinlass (3) in den Auslaufrohrkörper (2), einem ersten und einem zweiten Auslass (4, 5) aus dem Auslaufrohrkörper (2), einer ersten Fluidverbindung (6) vom Fluideinlass (3) zu dem ersten Auslass (4) und einer zweiten Fluidverbindung (7) vom Fluideinlass (3) zu dem zweiten Auslass (5), einem Ventil (8) mit einem Ventilschließkörper (9), der in dem Auslaufrohrkörper (2) zwischen einer ersten und einer zweiten Einstellposition (E1, E2) linearbeweglich angeordnet ist und zum wahlweisen Absperren und Freigeben der ersten und/oder der zweiten Fluidverbindung (6, 7) eingerichtet ist, und einer Betätigungseinheit (10) mit einem am Auslaufrohrkörper (2) angeordneten Betätigungselement (11) zur Betätigung des Ventilschließkörpers (9).

2.2. Erfindungsgemäß ist das Betätigungselement (11) linearbeweglich angeordnet und eine Bewegungsachse (B_{B}) des Betätigungselements (11) sowie eine Bewegungsachse (Bv) des Ventilschließkörpers (9) verlaufen im Wesentlichen parallel zueinander und im Wesentlichen parallel zu einer Längsachse (L_{A}) des Auslaufrohrkörpers (2).

2.3. Verwendung z.B. als Badewannen-Auslaufarmatur.

## Beschreibung

Die Erfindung bezieht sich auf eine sanitäre Auslaufarmatur nach dem Oberbegriff des Anspruchs 1.

Diese Auslaufarmatur beinhaltet ein Armaturengehäuse, das einen längserstreckten Auslaufrohrkörper umfasst, einen Fluideinlass in den Auslaufrohrkörper, einen ersten und einen zweiten Auslass aus dem Auslaufrohrkörper, eine erste Fluidverbindung vom Fluideinlass zu dem ersten Auslass und eine zweite Fluidverbindung vom Fluideinlass zu dem zweiten Auslass, ein Ventil mit einem Ventilschließkörper, der in dem Auslaufrohrkörper zwischen einer ersten und einer zweiten Einstellposition linearbeweglich angeordnet ist und zum wahlweisen Absperren und Freigeben der ersten und/oder der zweiten Fluidverbindung eingerichtet ist, und eine Betätigungseinheit mit einem am Auslaufrohrkörper angeordneten Betätigungselement zur Betätigung des Ventilschließkörpers.

Die Patentschrift EP 0 149 477 B2 offenbart eine gattungsgemäße, sanitäre Auslaufarmatur mit einem Betätigungsglied für ein Umstellventil zur wahlweisen Umstellung des ausfließenden Wassers in den Badewannen- oder Brauseauslauf mit einer aus einem Gehäuse herausgeführten Betätigungsstange, mit der durch eine vertikale Axialverschiebung die Stellbewegung auf den Umstellventilkörper übertragbar ist. Die Betätigungsstange ist mit ihrem aus dem Gehäuse herausgeführten Ende mit einem an einem Drehlager verschwenkbar befestigten Betätigungshebel verbunden, wobei das Drehlager an einem schachtelförmigen Passteil ausgebildet ist, welches in einer entsprechend bemessenen Ausnehmung im Gehäuse befestigbar ist. Der verschwenkbare Betätigungshebel ist mit einer Schnappverbindung auf dem Drehlager fixierbar, wobei die Öffnung des Passteils durch den Betätigungshebel im Wesentlichen verdeckt ist, so dass der Betätigungshebel zu beiden Seiten des Drehlagers für Handbetätigungen zugänglich ist und im Wesentlichen nicht aus dem Gehäuse vorsteht.

Die Patentschrift EP 0 450 535 B1 offenbart eine sanitäre Auslaufarmatur mit einem in horizontaler Lage eingebauten Umstellventil mit selbsttätiger Rückstellung zum Umstellen eines über einen Zulauf zugeführten strömenden Mediums von einem ersten Auslauf auf einen zweiten Auslauf. Das Umstellventil weist einen als Betätigungselement dienenden, von den beiden Ausläufen vertikal beabstandeten Zugknopf auf, der über einen Stößel mit einem zweiseitig wirkenden Ventilglied verbunden ist und durch welchen das in einem Gehäuse angeordnete Ventilglied zwischen zwei den Ausläufen zugeordneten Ventilsitzen bewegbar ist. Das Ventilglied ist durch den vom strömenden Medium verursachten Staudruck in einer von zwei mit den Ventilsitzen zusammenwirkenden Endstellungen gehalten. Das Umstellventil weist Rückstellmittel zum Rückstellen des Ventilgliedes bei ausbleibendem Staudruck in eine Ruhestellung auf, wobei die Rückstellmittel zum Einstellen einer Ruhestellung eingerichtet sind, bei der das Ventilglied eine von beiden Ventilsitzen beabstandete Stellung einnimmt. Für die beiden Ausläufe sind an einem Gehäuse der Auslaufarmatur ein Badewannen-Auslaufstück und über eine Rohrleitung eine Kopfbrause angeschlossen.

Der Erfindung liegt als technisches Problem die Bereitstellung einer sanitären Auslaufarmatur der eingangs genannten Art zugrunde, die gegenüber dem oben erwähnten Stand der Technik Vorteile insbesondere hinsichtlich ihres Aufbaus, ihrer kompakten, schlanken Bauweise und/oder ihrer Handhabung bietet.

Die Erfindung löst dieses Problem durch die Bereitstellung einer sanitären Auslaufarmatur mit den Merkmalen des Anspruchs 1. Vorteilhafte Weiterbildungen der Erfindung sind in den Unteransprüchen angegeben, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind.

Bei der erfindungsgemäßen sanitären Auslaufarmatur ist das Betätigungselement linearbeweglich angeordnet. Zudem verlaufen eine Bewegungsachse des Betätigungselements sowie eine Bewegungsachse des Ventilschließkörpers im Wesentlichen parallel zueinander. Die Bewegungsachse des Betätigungselements und die Bewegungsachse des Ventilschließkörpers verlaufen dabei im Wesentlichen parallel zu einer Längsachse des Auslaufrohrkörpers.

Diese Konfiguration mit der speziellen Anordnung der Bewegungsachsen des Betätigungselements und des Ventilschließkörpers bietet diverse Vorteile bezüglich des Aufbaus und der Bauweise der Auslaufarmatur. Da die Bewegungsachse des Ventilschließkörpers im Wesentlichen parallel zu der Längsachse des Auslaufrohrkörpers verläuft, kann die Auslaufarmatur und speziell der Auslaufrohrkörper besonders schlank ausgeführt werden.

In einer funktionell und konstruktiv vorteilhaften Ausführung sind die Bewegungsachse des Ventilschließkörpers und die Längsachse des Auslaufrohrkörpers überlagert, d.h. der Ventilschließkörper wird auch entlang der Längsachse des Auslaufrohrkörpers bewegt. Zudem sind vorzugsweise in dem Auslaufrohrkörper zwei entlang der Längsachse des Auslaufrohrkörpers beabstandete und gegenüberliegende Ventilsitze angeordnet, gegen die der in diesem Fall zweiseitig wirkende Ventilschließkörper je nach Einstellposition anliegt oder von denen der Ventilschließkörper je nach Einstellposition beabstandet ist. Jedem Ventilsitz ist dabei einer der beiden Auslässe zugeordnet.

In einer funktionell und konstruktiv vorteilhaften Ausführung gibt der Ventilschließkörper in der ersten Einstellposition die erste Fluidverbindung frei und sperrt die zweite Fluidverbindung ab und in der zweiten Einstellposition sperrt der Ventilschließkörper die erste Fluidverbindung ab und gibt die zweite Fluidverbindung frei. In anderweitigen alternativen Ausführungen gibt der Ventilschließkörper in einer der beiden Einstellpositionen beide Fluidverbindungen gleichzeitig frei oder sperrt beide Fluidverbindungen gleichzeitig ab. Beispielsweise kann der Ventilschließkörper dafür eingerichtet sein, in der ersten Einstellposition nur eine der beiden Fluidverbindungen freizugeben und in der zweiten Einstellposition beide Fluidverbindungen gleichzeitig freizugeben. In entsprechenden Ausführungen kann der Ventilschließkörper in eine dritte Einstellposition verbracht werden, in der er z.B. beide Fluidverbindungen freigibt oder absperrt. Das Betätigungselement ist vorzugsweise an einer Unterseite des Auslaufrohrkörpers angeordnet. Vorzugsweise ist dem Fluideinlass in den Auslaufrohrkörper eine Misch- und Absperrventilvorrichtung im Armaturengehäuse fluidtechnisch vorgeschaltet.

In einer Weiterbildung der Erfindung weist der Auslaufrohrkörper eine Aussparung auf, durch die hindurch das Betätigungselement betätigbar ist. In alternativen Ausführungen ragt aus der Aussparung das Betätigungselement zumindest teilweise heraus. Dies stellt konstruktiv und funktionell vorteilhafte Realisierungen für die Betätigung des Ventils dar. Das Betätigungselement erstreckt sich vorzugsweise zu mindestens einer Seite abkragend, insbesondere in eine Richtung senkrecht zu der Bewegungsachse des Betätigungselements. Diese Maßnahme trägt weitergehend zu einer besonders einfachen Handhabung der Auslaufarmatur bei, insbesondere zu einer besonders einfachen Zugänglichkeit des Betätigungselements zur Betätigung des Ventilschließkörpers. In alternativen Ausführungen erstreckt sich das Betätigungselement zu beiden Seiten abkragend, insbesondere in entgegengesetzte Richtungen senkrecht zu der Bewegungsachse des Betätigungselements. In weiter alternativen Ausführungen umgreift das Betätigungselement zumindest teilweise den Auslaufrohrkörper umfangsseitig, insbesondere von unten. Das Betätigungselement ist vorzugsweise lösbar in der Aussparung aufgenommen.

In einer Ausgestaltung der Erfindung ist die Aussparung an einer Unterseite des Auslaufrohrkörpers angeordnet. Dies stellt eine vorteilhafte Realisierung der Betätigungseinheit dar. Die Aussparung kann auf diese Weise sehr einfach von der Sichtseite, d.h. der Benutzerseite, aus optisch unsichtbar bzw. unauffällig realisiert werden. In alternativen Ausführungen ist die Aussparung an einer Oberseite oder seitlich am Auslaufrohrkörper angeordnet.

In einer Weiterbildung der Erfindung weist die Betätigungseinheit einen Übertragungskörper auf, der einerseits mit dem Betätigungselement und andererseits mit dem Ventilschließkörper verbunden ist. Dies realisiert eine vorteilhaft einfache Bewegungskinematik für die Betätigung des Ventilschließkörpers. Der Übertragungskörper ist vorzugsweise in einem vorderen, dem ersten Auslass zugewandten Endbereich mit dem Betätigungselement und in einem hinteren, dem vorderen Endbereich gegenüberliegenden Endbereich mit dem Ventilschließkörper verbunden. Das Betätigungselement ist vorzugsweise lösbar mit dem Übertragungskörper verbunden.

In einer Ausgestaltung der Erfindung weist der Übertragungskörper ein Führungselement zur Führung des Übertragungskörpers im Auslaufrohrkörper und ein Kraftübertragungselement zur Übertragung einer Betätigungskraft auf den Ventilschließkörper auf. Vorzugsweise weist der Übertragungskörper im vorderen, dem ersten Auslass zugewandten Endbereich das Führungselement und im hinteren, dem vorderen Endbereich gegenüberliegenden Endbereich das Kraftübertragungselement auf. Dies stellt eine funktionell zuverlässige Realisierung der Betätigungseinheit dar. Das Führungselement und das Kraftübertragungselement erstrecken sich vorzugsweise bis zu einem Mittenbereich des Übertragungskörpers und liegen dort aneinander an. Das Betätigungselement ist vorzugsweise mit dem Führungselement verbunden.

In einer Ausgestaltung der Erfindung ist der Übertragungskörper über eine Linearführung an dem Auslaufrohrkörper geführt, wobei die Linearführung zwischen den beiden Auslässen angeordnet ist. Dies stellt eine mit vergleichsweise geringem Herstellungsaufwand realisierbare und funktionell vorteilhafte Führung des Übertragungskörpers und somit des Betätigungselements in dem Auslaufrohrkörper dar. Die Linearführung ist vorzugsweise innerhalb des Auslaufrohrkörpers angeordnet, insbesondere an einer Unterseite eines Auslassrohrs der ersten Fluidverbindung.

In einer weiteren Ausgestaltung der Erfindung ist die Linearführung an einer Gehäuseunterseite des Auslaufrohrkörpers angeordnet. Die Linearführung ist vorzugsweise zwischen der Gehäuseunterseite des Auslaufrohrkörpers und der Unterseite des Auslassrohrs der ersten Fluidverbindung angeordnet.

In einer Ausgestaltung der Erfindung weist das Kraftübertragungselement zwei Kraftübertragungsarme auf, die parallel versetzt zueinander angeordnet sind, wobei vorzugsweise die Haupterstreckungsachsen der beiden Kraftübertragungsarme parallel zueinander ausgerichtet sind, und beide mit dem Ventilschließkörper verbunden sind. Dies stellt eine konstruktiv und funktionell vorteilhafte Realisierung zur gleichmäßigen Kraftübertragung auf den Ventilschließkörper dar. Die Kraftübertragungsarme sind vorzugsweise im Wesentlichen parallel zu der Bewegungsachse des Betätigungselements ausgebildet. Die Kraftübertragungsarme laufen vorzugsweise in einem hinteren, dem ersten Auslass abgewandten Endbereich des Übertragungskörpers zusammen und sind von diesem Punkt aus über einen Stößel mit dem Ventilschließkörper verbunden. Der Stößel verläuft dabei entlang der Bewegungsachse des Ventilschließkörpers. In alternativen Ausführungen weist das Kraftübertragungselement zwei nicht-parallel verlaufende Kraftübertragungsarme oder nur einen Kraftübertragungsarm auf.

In einer Ausgestaltung der Erfindung sind die Kraftübertragungsarme einenends mit dem Betätigungselement und anderenends mit dem Ventilschließkörper verbunden. Dabei sind die Kraftübertragungsarme dazu eingerichtet, eine auf das Betätigungselement wirkende Betätigungskraft an den Ventilschließkörper zu übertragen. Zusätzlich oder alternativ weisen die Kraftübertragungsarme und der Ventilschließkörper sowohl in der ersten Einstellposition als auch in der zweiten Einstellposition eine gemeinsame horizontale Schnittebene auf. In anderen Worten verlaufen die Kraftübertragungsarme im Wesentlichen parallel und auf einer gleichen Höhe zu der Bewegungsachse des Ventilschließkörpers.

In einer Ausgestaltung der Erfindung verläuft die zweite Fluidverbindung zwischen den Kraftübertragungsarmen hindurch zum zweiten Auslass. Dadurch wird vorteilhaft der Platz zwischen den Kraftübertragungsarmen zum Hindurchführen der zweiten Fluidverbindung genutzt.

In einer Ausgestaltung der Erfindung verlaufen vorzugsweise die Kraftübertragungsarme zur Verbindung zwischen dem Betätigungselement und dem Ventilschließkörper beidseitig entlang einer Längserstreckung des Ventils.

In einer Weiterbildung der Erfindung ist das Betätigungselement mittels zumindest einer Rückstellfeder in eine Ruheposition vorgespannt. Dies stellt eine vorteilhafte Realisierung für die Betätigungseinheit dar. Die mindestes eine Rückstellfeder ist vorzugsweise als eine Schraubendruckfeder ausgeführt. In vorteilhaften Ausführungen weist die Betätigungseinheit mehrere Rückstellfedern, z.B. drei Rückstellfedern, auf. Das Betätigungselement kann mit einer Rückstellbewegung des Ventilschließkörpers durch ausbleibenden Fluiddruck gekoppelt oder von dieser entkoppelt sein. Im ersten Fall wird bei Abschalten des Fluids der Ventilschließkörper wieder in seine Ausgangseinstellposition zurückgestellt und das Betätigungselement wird ebenfalls zurückgestellt. Im zweiten Fall wird das Betätigungselement direkt nach seiner Betätigung über die Rückstellfeder wieder in seine Ruheposition bzw. Ausgangsposition zurückbewegt, während der Ventilschließkörper durch den Fluiddruck noch in der Einstellposition gehalten wird. Erst nach Abstellen der Fluidzufuhr und dem damit verbundenen Ausbleiben des Fluiddrucks wird dann auch der Ventilschließkörper in seine Ausgangsposition zurückbewegt.

In einer Weiterbildung der Erfindung ist in Längserstreckungsrichtung des Auslaufkörpers der erste Auslass vor dem zweiten Auslass angeordnet und das Betätigungselement ist zwischen dem ersten Auslass und dem zweiten Auslass angeordnet. Der Platz zwischen den beiden Auslässen wird in diesem Fall vorteilhaft zum Unterbringen des Betätigungselements genutzt. Der erste Auslass kann z.B. am Ende eines zugehörigen Auslaufrohrs angeordnet sein, und der zweite Auslass kann zur Ankopplung eines Brauseschlauchs dienen. In alternativen Ausführungen ist das Betätigungselement hinter dem zweiten Auslass angeordnet. In weiter alternativen Ausführungen ist das Betätigungselement vor dem ersten Auslass angeordnet.

In einer Weiterbildung der Erfindung sind die Aussparung und die beiden Auslässe auf einer gemeinsamen Längsschnittebene angeordnet. Dies ist für entsprechende Anwendungen aus konstruktiver und/oder gestalterischer Sicht von Vorteil. Die Aussparung und die beiden Auslässe weisen vorzugsweise eine gemeinsame vertikale Schnittebene auf, d.h. sie liegen in der Gebrauchslage der Armatur in vertikaler Projektion gesehen auf einer Linie hintereinander.

In einer Weiterbildung der Erfindung ist das Ventil ein Umstellventil, wobei der Ventilschließkörper dafür eingerichtet ist, in der ersten Einstellposition die erste Fluidverbindung freizugeben und die zweite Fluidverbindung abzusperren und in der zweiten Einstellposition die erste Fluidverbindung abzusperren und die zweite Fluidverbindung freizugeben. Dies eignet sich z.B. zur Umschaltung zwischen einem Badewanneneinlauf und einer Badewannen-Handbrause. In alternativen Ausführungen ist das Ventil ein Absperrventil oder ein kombiniertes Absperr- und Umstellventil.

In einer Weiterbildung der Erfindung ist die Auslaufarmatur als Badewannen-Aufputzauslaufarmatur ausgebildet, wobei der erste Auslass ein Wannenauslauf und der zweite Auslass ein Handbrauseauslass ist. In einer alternativen Ausführung ist der zweite Auslass ein Kopfbrauseauslass.

In einer Weiterbildung der Erfindung weist die Auslaufarmatur einen dritten Auslass aus dem Armaturengehäuse und eine dritte Fluidverbindung vom Fluideinlass zu dem dritten Auslass auf. Dabei ist der dritte Auslass vorzugsweise an einer Oberseite des Armaturengehäuses angeordnet. Der dritte Auslass ist vorzugsweise ein Kopfbrauseauslass. Die Auslaufarmatur weist dazu vorzugsweise ein weiteres Ventil mit einem weiteren Ventilschließkörper auf, der in dem Armaturengehäuse zwischen einer ersten und einer zweiten Einstellposition beweglich angeordnet ist und zum wahlweisen Absperren und Freigeben der dritten Fluidverbindung eingerichtet ist.

Vorteilhafte Ausführungsformen der Erfindung sind in den Zeichnungen dargestellt und werden nachfolgend beschrieben. Diese und weitere Ausführungsformen der Erfindung werden nachfolgend näher beschrieben. Hierbei zeigen:
- Fig. 1: eine Perspektivansicht von schräg vorne unten auf eine erfindungsgemäße sanitäre Auslaufarmatur mit einem Armaturengehäuse, das einen längserstreckten Auslaufrohrkörper umfasst,
- Fig. 2: eine Draufsicht von vorne auf die Auslaufarmatur von Fig. 1,
- Fig. 3: eine Draufsicht von unten auf die Auslaufarmatur von Fig. 1, wobei eine Unterseite des Auslaufrohrkörpers ausgeblendet ist,
- Fig. 4: eine Schnittansicht längs einer Linie IV-IV von Fig. 2, wobei ein Ventilschließkörper in einer ersten Einstellposition eine erste Fluidverbindung freigibt und eine zweite Fluidverbindung absperrt,
- Fig. 5: eine vergrößerte, perspektivische Ausschnittansicht von Fig. 3 und
- Fig. 6: eine Schnittansicht gemäß Fig. 4, wobei der Ventilschließkörper in einer zweiten Einstellposition die erste Fluidverbindung absperrt und die zweite Fluidverbindung freigibt.

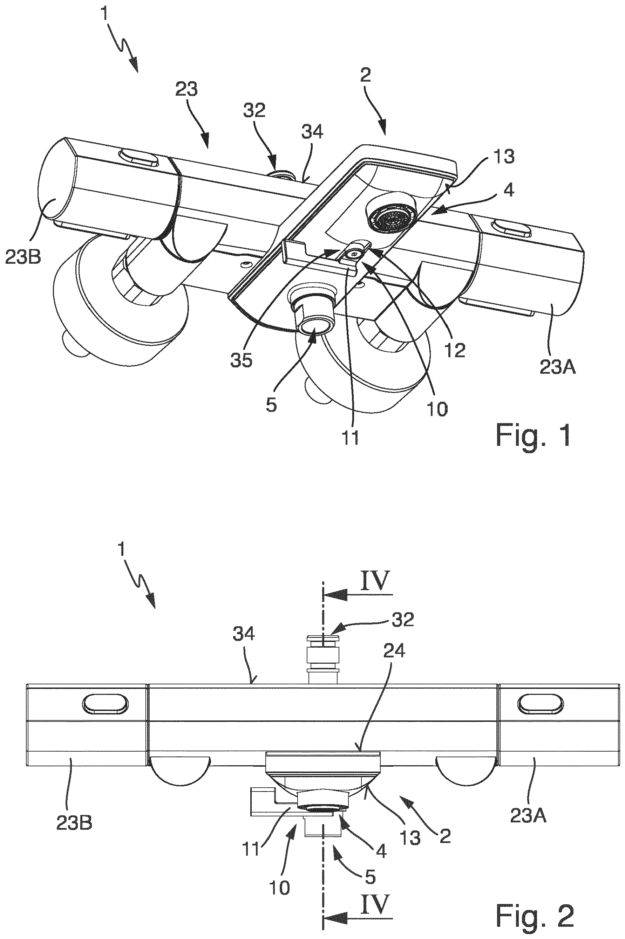

Wie aus den Figuren 1 bis 6 anhand einer exemplarischer Ausführung ersichtlich, umfasst die erfindungsgemäße sanitäre Auslaufarmatur ein Armaturengehäuse 1, das einen längserstreckten Auslaufrohrkörper 2 umfasst, einen Fluideinlass 3 in den Auslaufrohrkörper 2, einen ersten Auslass 4 und einen zweiten Auslass 5 aus dem Auslaufrohrkörper 2, eine erste Fluidverbindung 6 vom Fluideinlass 3 zu dem ersten Auslass 4 und eine zweite Fluidverbindung 7 vom Fluideinlass 3 zu dem zweiten Auslass 5, ein Ventil 8 und eine Betätigungseinheit 10.

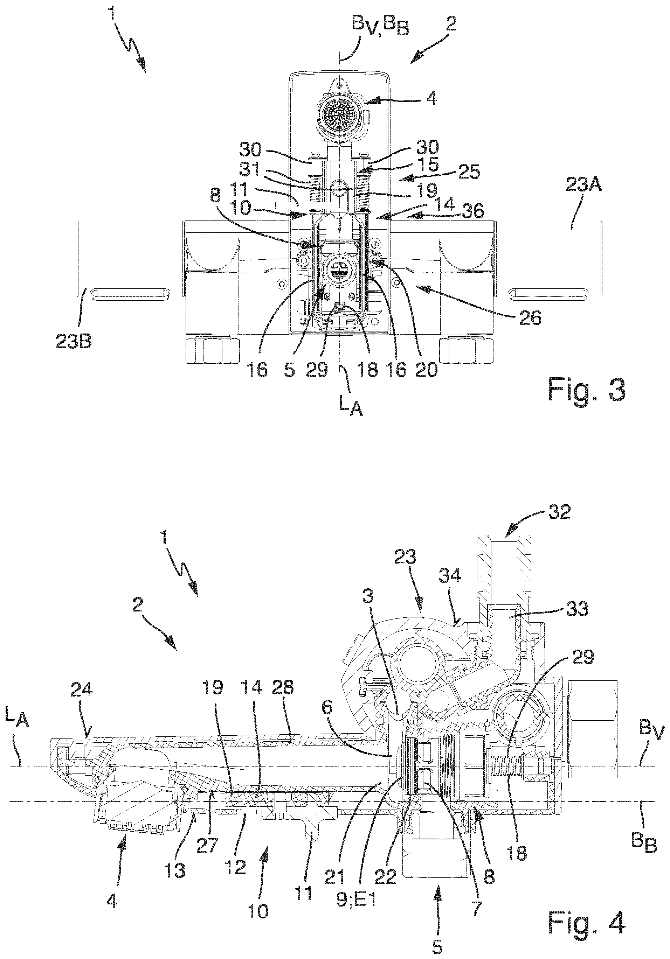

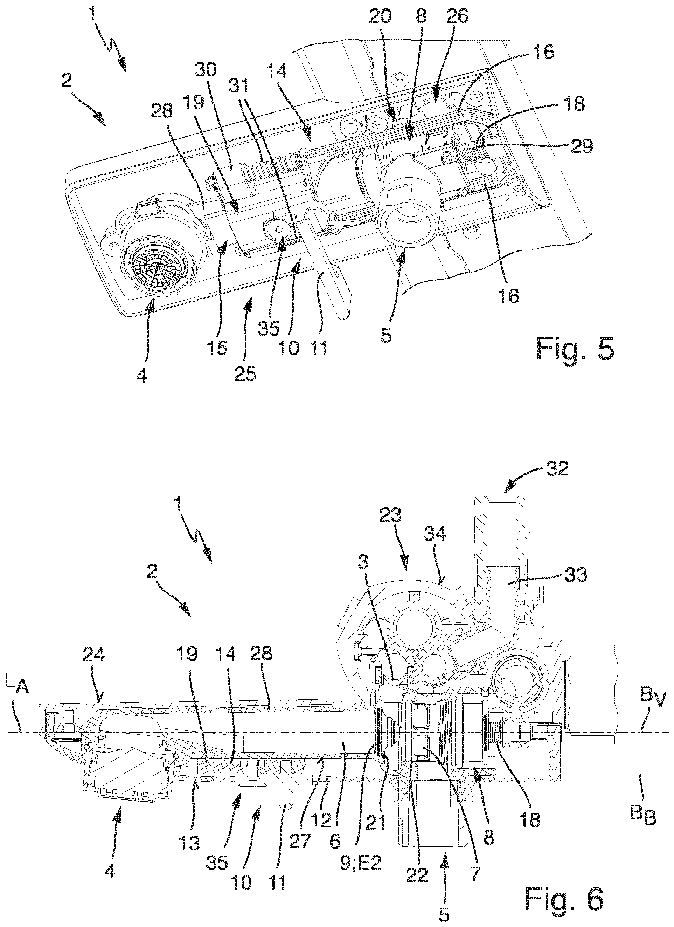

Das Ventil 8 weist einen im gezeigten Beispiel zweiseitig wirkenden Ventilschließkörper 9 auf, der in dem Auslaufrohrkörper 2 zwischen einer ersten Einstellposition E1 und einer zweiten Einstellposition E2 linearbeweglich angeordnet ist und zum wahlweisen Absperren und Freigeben der ersten Fluidverbindung 6 und/oder der zweiten Fluidverbindung 7 eingerichtet ist, wie in den Fig. 4 und 6 dargestellt ist.

In der gezeigten Ausführung liegt der Ventilschließkörper 9 in der zweiten Einstellposition E2 auf einem zugeordneten, ersten Ventilsitz 21 auf und ist von dem zweiten Ventilsitz 22 beabstandet bzw. abgehoben, wie in der Fig. 6 gezeigt ist, wodurch der Ventilschließkörper 9 die zugeordnete, erste Fluidverbindung 6 und damit den Fluideinlass 3 gegenüber dem zugeordneten, ersten Auslass 4 abdichtet bzw. absperrt, hingegen die zweite Fluidverbindung 7 freigibt. In der ersten Einstellposition E1 ist der Ventilschließkörper 9 von dem ersten Ventilsitz 21 beabstandet bzw. abgehoben und liegt auf einem zugeordneten, zweiten Ventilsitz 22 auf, wie in der Fig. 4 gezeigt, wodurch der Ventilschließkörper 9 die zugeordnete, zweite Fluidverbindung 7 und damit den Fluideinlass 3 gegenüber dem zugeordneten, zweiten Auslass 5 abdichtet bzw. absperrt, hingegen die erste Fluidverbindung 6 freigibt. Die Ventilsitze 21, 22 können z.B. wie in der gezeigten Ventilausführung in einer gleichen horizontalen Schnittebene des Auslaufrohrkörpers 21 liegen. In anderen Worten: die Ventilsitze 21, 22 sind in dem Auslaufrohrkörper 2 entlang einer Längsachse L_{A} des Auslaufrohrkörpers 2 beabstandet und gegenüberliegend angeordnet.

In einer nicht gezeigten Ausführung gibt der Ventilschließkörper 9 in einer entsprechenden Einstellposition beide Fluidverbindungen 6, 7 gleichzeitig frei oder sperrt in einer entsprechenden Einstellposition beide Fluidverbindungen 6, 7 gleichzeitig ab.

Die Betätigungseinheit 10 weist ein am Auslaufrohrkörper 2 angeordnetes Betätigungselement 11 zur Betätigung des Ventilschließkörpers 9 durch den Benutzer auf. Das Betätigungselement 11 ist linearbeweglich angeordnet. In der gezeigten Ausführung verlaufen eine Bewegungsachse B_{B} des Betätigungselements 11 sowie eine Bewegungsachse Bv des Ventilschließkörpers 9 im Wesentlichen parallel zueinander und im Wesentlichen parallel zu der Längsachse L_{A} des Auslaufrohrkörpers 2, wie aus Fig. 3 ersichtlich.

In vorteilhaften Ausführungsformen ist das Betätigungselement 11, wie im gezeigten Beispiel, an einer Unterseite 13 des Auslaufrohrkörpers 2 angeordnet.

In der gezeigten Ausführung ist die Bewegungsachse Bv des Ventilschließkörpers 9 und die Längsachse L_{A} des Auslaufrohrkörpers 2 überlagert, d.h. sie fallen zusammen, wie in den Fig. 4 und 6 gezeigt ist.

In vorteilhaften Ausführungsformen weist der Auslaufrohrkörper 2, wie im gezeigten Beispiel, eine Aussparung 12 auf, aus der das Betätigungselement 11 teilweise herausragt, wie in der Fig. 1 gezeigt ist. Die Aussparung 12 ist im gezeigten Beispiel in Richtung der Bewegungsachse B_{B} des Betätigungselements 11 längserstreckt.

In der gezeigten Ausführung erstreckt sich das Betätigungselement 11 mit einem Bedienfortsatz zu einer Seite des Auslaufrohrkörpers 2, d.h. quer zu dessen Längserstreckung, in eine Richtung senkrecht zu der Bewegungsachse B_{B} des Betätigungselements 11, wie in der Fig. 2 gezeigt ist. Der Bedienfortsatz ist mit einem Finger eines Nutzers bedienbar. Das Betätigungselement 11 ist innerhalb der Aussparung 12 beweglich aufgenommen.

In nicht gezeigten Ausführungen ist das Betätigungselement 11 durch die Aussparung 12 hindurch betätigbar und liegt dazu im Inneren des Auslaufrohrkörpers 2.

In entsprechenden Realisierungen ist die Aussparung 12, wie im gezeigten Beispiel, an der Unterseite 13 des Auslaufrohrkörpers 2 angeordnet. Die Aussparung 12 ist von der Sichtseite, d.h. der Benutzerseite, aus optisch unsichtbar realisiert, wie in der Fig. 2 gezeigt ist.

In einer nicht gezeigten Ausführung ist die Aussparung 12 an einer Oberseite 24 des Auslaufrohrkörpers 2 oder seitlich am Auslaufrohrkörper 2 angeordnet.

In vorteilhaften Ausführungen weist die Betätigungseinheit 10, wie im gezeigten Beispiel, einen Übertragungskörper 14 auf, der einerseits mit dem Betätigungselement 11 und andererseits mit dem Ventilschließkörper 9 verbunden ist, wie in Fig. 5 gezeigt ist.

Der Übertragungskörper 14 ist in entsprechenden Ausführungen, wie im gezeigten Beispiel, in einem vorderen, dem ersten Auslass 4 zugewandten Endbereich 25 mittels einer kraft- und/oder formschlüssigen Verbindung lösbar mit dem Betätigungselement 11 und in einem hinteren, dem vorderen Endbereich 25 gegenüberliegenden Endbereich 26 mit dem Ventilschließkörper 9 verbunden, wie in den Fig. 3 und 4 gezeigt ist.

Das Betätigungselement 11 ist in entsprechenden Ausführungen, wie im gezeigten Beispiel, mittels einer Schraubverbindung 35 lösbar mit dem Übertragungskörper 14 verbunden, wie in Fig. 3 und 4 gezeigt ist.

In entsprechenden Ausführungen weist der Übertragungskörper 14, wie im gezeigten Beispiel, einenends ein Führungselement 19 zur Führung des Übertragungskörpers 14 im Auslaufrohrkörper 2 und anderenends ein Kraftübertragungselement 20 zur Übertragung einer Betätigungskraft auf den Ventilschließkörper 9 auf. Im gezeigten Fall weist der Übertragungskörper 14 in seinem vorderen Endbereich 25 das Führungselement 19 und in seinem hinteren Endbereich 26 das Kraftübertragungselement 20 auf. In der gezeigten Ausführung liegen das Führungselement 19 und das Kraftübertragungselement 20 in einem Mittenbereich 36 des Übertragungskörpers 14 aneinander, wie in der Fig. 3 gezeigt ist.

In der gezeigten Ausführung ist das Betätigungselement 11 mittels der Schraubverbindung 35 mit dem Führungselement 19 verbunden, wie in der Fig. 3 gezeigt ist.

In vorteilhaften Realisierungen ist der Übertragungskörper 14, wie im gezeigten Beispiel, über eine Linearführung 15 an dem Auslaufrohrkörper 2 geführt, wobei die Linearführung 15 zwischen den beiden Auslässen 4, 5 angeordnet ist. Die Linearführung 15 ist in entsprechenden Ausführungen, wie im gezeigten Fall, innerhalb des Auslaufrohrkörpers 2 an einer Unterseite 27 eines ersten Auslassrohrs 28 der ersten Fluidverbindung 6 angeordnet.

In vorteilhaften Ausführungen ist die Linearführung 15, wie im gezeigten Beispiel, an einer Gehäuseunterseite 13 des Auslaufrohrkörpers 2 angeordnet. Die Linearführung 15 ist vorzugsweise, wie gezeigt, zwischen der Gehäuseunterseite 13 des Auslaufrohrkörpers 2 und der Unterseite 27 des ersten Auslassrohrs 28 angeordnet. Im vorliegenden Fall wirken die Linearführung 15 und das Übertragungselement 14 schlittenartig zusammen.

In vorteilhaften Ausführungsformen weist das Kraftübertragungselement 20, wie im gezeigten Beispiel, zwei parallel versetzt angeordnete Kraftübertragungsarme 16 auf, die beide mit dem Ventilschließkörper 9 verbunden sind. Die Kraftübertragungsarme 16 sind in entsprechenden Ausführungen, wie im gezeigten Beispiel, im Wesentlichen parallel zu der Bewegungsachse B_{B} des Betätigungselements 11 ausgebildet.

In der gezeigten Ausführung laufen die Kraftübertragungsarme 16 stirnendseitig in dem hinteren Endbereich 26 des Übertragungskörpers 14 zusammen und sind von diesem Punkt aus über einen Stößel 29 mit dem Ventilschließkörper 9 verbunden.

In vorteilhaften Realisierungen sind die Kraftübertragungsarme 16, wie im gezeigten Beispiel, einenends mit dem Betätigungselement 11 und anderenends mit dem Ventilschließkörper 9 verbunden. Die Kraftübertragungsarme 16 sind dazu eingerichtet, eine auf das Betätigungselement 11 wirkende Betätigungskraft an den Ventilschließkörper 9 zu übertragen.

In der gezeigten Ausführung weisen die Kraftübertragungsarme 16 und der Ventilschließkörper 9 sowohl in der ersten Einstellposition E1 als auch in der zweiten Einstellposition E2 eine gemeinsame, in der Gebrauchslage der Armatur im Wesentlichen horizontale Schnittebene auf. Die Kraftübertragungsarme 16 verlaufen somit im Wesentlichen parallel und auf einer gleichen Höhe zu der Bewegungsachse Bv des Ventilschließkörpers 9, wodurch die Kraftübertragungsarme 16 zur Verbindung zwischen dem Betätigungselement 11 und dem Ventil 8 beidseitig entlang des Ventils 8 verlaufen.

In entsprechenden Ausführungen verläuft die zweite Fluidverbindung 7, wie im gezeigten Beispiel, zwischen den Kraftübertragungsarmen 16 hindurch zum zweiten Auslass 5, wie in der Fig. 5 gezeigt ist.

In vorteilhaften Ausführungsformen ist das Betätigungselement 11, wie im gezeigten Beispiel, mittels zumindest einer Rückstellfeder 18, 31 in eine Ruheposition vorgespannt. In der gezeigten Ausführung ist eine erste Rückstellfeder 18 im Bereich des Stößels 29 angeordnet. Zwei weitere Rückstellfedern 31 sind zueinander parallel im vorderen Endbereich 25 des Übertragungskörpers 14 angeordnet. Dazu liegen die beiden vorderen Federn 31 jeweils einenends an dem Kraftübertragungselement 20 und anderenends an einem festen Stützelement 30 des Auslassrohrs 28 an, wie in den Fig. 3 und 5 gezeigt ist. Diese beiden Federn 31 sind beidseitig neben der Linearführung 15 angeordnet und dienen dazu, bei der Rückstellung des Ventilschließkörpers 9 die Reibungskraft der Linearführung 15 zu überwinden. In der gezeigten Ausführung sind dazu die beiden Federn 31 in Verlängerung der Kraftübertragungsarme 16 ausgebildet.

In vorteilhaften Realisierungen ist in Längserstreckungsrichtung des Auslaufkörpers 2 der erste Auslass 4 vor dem zweiten Auslass 5 angeordnet und das Betätigungselement 11 ist zwischen dem ersten Auslass 4 und dem zweiten Auslass 5 angeordnet, wie dies beim gezeigten Beispiel der Fall ist und in der Fig. 1 gezeigt ist.

In vorteilhaften Ausführungsformen sind die Aussparung 12 und die beiden Auslässe 4, 5, wie im gezeigten Beispiel, auf einer gemeinsamen Längsschnittebene angeordnet. Die Aussparung 12 und die beiden Auslässe 4, 5 weisen vorliegend eine gemeinsame vertikale Schnittebene auf, wie in der Fig. 2 gezeigt ist.

In entsprechenden Ausführungen ist das Ventil 8, wie im gezeigten Beispiel, ein Umstellventil. Dabei ist der Ventilschließkörper 9 in der gezeigten Ausführung dafür eingerichtet, in der ersten Einstellposition E1 die erste Fluidverbindung 6 freizugeben und die zweite Fluidverbindung 7 abzusperren und in der zweiten Einstellposition E2 die erste Fluidverbindung 6 abzusperren und die zweite Fluidverbindung 7 freizugeben.

In entsprechenden Realisierungen ist die Auslaufarmatur als Badewannen-Aufputzauslaufarmatur ausgebildet, wobei der erste Auslass 4 ein Wannenauslauf und der zweite Auslass 5 ein Handbrauseauslass ist. Das gezeigte Beispiel ist für diese Realisierung verwendbar.

In einer nicht gezeigten Ausführung ist der zweite Auslass 5 an einer Oberseite 34 des Armaturengehäuses 1 angeordnet und ist ein Kopfbrauseauslass.

In Ausführungen wie dem gezeigten Beispiel weist die Auslaufarmatur einen dritten Auslass 32 aus dem Armaturengehäuse 1 auf. Die Auslaufarmatur 1 weist eine dritte Fluidverbindung 33 vom Fluideinlass 3 zu dem dritten Auslass 32 auf. Dabei ist vorliegend der dritte Auslass 32 an der Oberseite 34 des Armaturengehäuses 1 angeordnet. Der dritte Auslass 32 kann z.B. als ein Kopfbrauseauslass fungieren. Die Auslaufarmatur weist dazu ein in den Figuren nicht gezeigtes, weiteres Ventil mit einem weiteren Ventilschließkörper auf, der in dem Armaturengehäuse 1 zwischen einer ersten und einer zweiten Einstellposition beweglich angeordnet ist und zum wahlweisen Absperren und Freigeben der dritten Fluidverbindung 33 eingerichtet ist.

In vorteilhaften Ausführungsformen ist dem Fluideinlass 3 in den Auslaufrohrkörper 2 eine weitere Ventilvorrichtung fluidtechnisch vorgeschaltet, vorzugsweise im Armaturengehäuse 1. Im gezeigten Beispiel beinhaltet dies eine Ventilkonfiguration 23, die, wie aus Fig. 1 ersichtlich ist, ein Umstellventil 23B und ein Thermostatventil 23A umfasst, wobei in dem gezeigten Beispiel das Umstellventil 23B zur Umstellung zwischen dem Fluideinlass 3 in den Auslaufrohrkörper 2 und dem dritten Auslass 32 eingerichtet ist.

Wie die gezeigten und die weiteren oben erläuterten Ausführungsbeispiele deutlich machen, stellt die Erfindung eine sanitäre Auslaufarmatur zur Verfügung, die mit vergleichsweise einfachem Aufbau realisierbar ist, dabei eine kompakte, schlanke Bauweise ermöglicht und eine einfache Handhabung bietet.

## Patentansprüche

1. Sanitäre Auslaufarmatur, mit
- einem Armaturengehäuse (1), das einen längserstreckten Auslaufrohrkörper (2) umfasst,
- einem Fluideinlass (3) in den Auslaufrohrkörper (2),
- einem ersten und einem zweiten Auslass (4, 5) aus dem Auslaufrohrkörper (2),
- einer ersten Fluidverbindung (6) vom Fluideinlass (3) zu dem ersten Auslass (4) und einer zweiten Fluidverbindung (7) vom Fluideinlass (3) zu dem zweiten Auslass (5),
- einem Ventil (8) mit einem Ventilschließkörper (9), der in dem Auslaufrohrkörper (2) zwischen einer ersten und einer zweiten Einstellposition (E1, E2) linearbeweglich angeordnet ist und zum wahlweisen Absperren und Freigeben der ersten und/oder der zweiten Fluidverbindung (6, 7) eingerichtet ist, und
- einer Betätigungseinheit (10) mit einem am Auslaufrohrkörper (2) angeordneten Betätigungselement (11) zur Betätigung des Ventilschließkörpers (9),
**dadurch gekennzeichnet, dass**
- das Betätigungselement (11) linearbeweglich angeordnet ist und eine Bewegungsachse (B_{B}) des Betätigungselements (11) sowie eine Bewegungsachse (Bv) des Ventilschließkörpers (9) im Wesentlichen parallel zueinander und im Wesentlichen parallel zu einer Längsachse (L_{A}) des Auslaufrohrkörpers (2) verlaufen.

2. Sanitäre Auslaufarmatur nach Anspruch 1, weiter **dadurch gekennzeichnet, dass** der Auslaufrohrkörper (2) eine Aussparung (12) aufweist, durch die hindurch das Betätigungselement (11) betätigbar ist oder aus der das Betätigungselement (11) zumindest teilweise herausragt.

3. Sanitäre Auslaufarmatur nach Anspruch 2, weiter **dadurch gekennzeichnet, dass** die Aussparung (12) an einer Unterseite (13) des Auslaufrohrkörpers (2) angeordnet ist.

4. Sanitäre Auslaufarmatur nach einem der Ansprüche 1 bis 3, weiter **dadurch gekennzeichnet, dass** die Betätigungseinheit (10) einen Übertragungskörper (14) aufweist, der einerseits mit dem Betätigungselement (11) und andererseits mit dem Ventilschließkörper (9) verbunden ist.

5. Sanitäre Auslaufarmatur nach Anspruch 4, weiter **dadurch gekennzeichnet, dass** der Übertragungskörper (14) ein Führungselement (19) zur Führung des Übertragungskörpers (14) im Auslaufrohrkörper (2) und einen Kraftübertragungselement (20) zur Übertragung einer Betätigungskraft auf den Ventilschließkörper (9) aufweist.

6. Sanitäre Auslaufarmatur nach Anspruch 4 oder 5, weiter **dadurch gekennzeichnet, dass** der Übertragungskörper (14) über eine Linearführung (15) an dem Auslaufrohrkörper (2) geführt ist, wobei die Linearführung (15) zwischen den beiden Auslässen (4, 5) angeordnet ist.

7. Sanitäre Auslaufarmatur nach Anspruch 6, weiter **dadurch gekennzeichnet, dass** die Linearführung (15) an einer Gehäuseunterseite (13) des Auslaufrohrkörpers (2) angeordnet ist.

8. Sanitäre Auslaufarmatur nach einem der Ansprüche 5 bis 7, weiter **dadurch gekennzeichnet, dass** das Kraftübertragungselement (20) zwei parallel versetzt angeordnete Kraftübertragungsarme (16) aufweist, die beide mit dem Ventilschließkörper (9) verbunden sind.

9. Sanitäre Auslaufarmatur nach Anspruch 8, weiter **dadurch gekennzeichnet, dass** die Kraftübertragungsarme (16) einenends mit dem Betätigungselement (11) und anderenends mit dem Ventilschließkörper (9) verbunden sind, wobei die Kraftübertragungsarme (16) dazu vorgesehen sind, eine auf das Betätigungselement (11) wirkende Betätigungskraft an den Ventilschließkörper (9) zu übertragen, und/oder die Kraftübertragungsarme (16) und der Ventilschließkörper (9) sowohl in der ersten als auch in der zweiten Einstellposition (E1, E2) eine gemeinsame horizontale Schnittebene aufweisen.

10. Sanitäre Auslaufarmatur nach Anspruch 8 oder 9, weiter **dadurch gekennzeichnet, dass** die zweite Fluidverbindung (7) zwischen den Kraftübertragungsarmen (16) hindurch zum zweiten Auslass (5) verläuft.

11. Sanitäre Auslaufarmatur nach einem der Ansprüche 1 bis 10, weiter **dadurch gekennzeichnet, dass** das Betätigungselement (11) mittels zumindest einer Rückstellfeder (18, 31) in eine Ruheposition vorgespannt ist.

12. Sanitäre Auslaufarmatur nach einem der Ansprüche 1 bis 11, weiter **dadurch gekennzeichnet, dass** in Längserstreckungsrichtung des Auslaufkörpers (2) der erste Auslass (4) vor dem zweiten Auslass (5) angeordnet und das Betätigungselement (11) zwischen dem ersten und dem zweiten Auslass (4, 5) angeordnet ist.

13. Sanitäre Auslaufarmatur nach einem der Ansprüche 2 bis 12, weiter **dadurch gekennzeichnet, dass** die Aussparung (12) und die beiden Auslässe (4, 5) auf einer gemeinsamen Längsschnittebene angeordnet sind.

14. Sanitäre Auslaufarmatur nach einem der Ansprüche 1 bis 13, weiter **dadurch gekennzeichnet, dass** das Ventil (8) ein Umstellventil ist, wobei der Ventilschließkörper (9) dafür eingerichtet ist, in der ersten Einstellposition (E1) die erste Fluidverbindung (6) freizugeben und die zweite Fluidverbindung (7) abzusperren und in der zweiten Einstellposition (E2) die erste Fluidverbindung (6) abzusperren und die zweite Fluidverbindung (7) freizugeben.

15. Sanitäre Auslaufarmatur nach einem der Ansprüche 1 bis 14, weiter **dadurch gekennzeichnet, dass** die Auslaufarmatur als Badewannen-Aufputzauslaufarmatur ausgebildet ist, wobei der erste Auslass (4) ein Wannenauslauf und der zweite Auslass (5) ein Handbrauseauslass ist.
